# EUROPEAN PATENT APPLICATION

(11) **EP 4 510 637 A1**
(43) Date of publication of application: **19.02.2025**
(21) Application number: 23795443.3
(22) Date of filing: 26.04.2023
(51) Int. Cl.: H04W 4/02

(54) **COMMUNICATION METHOD AND COMMUNICATION APPARATUS**

(30) Priority: 29.04.2022 CN 202210467495
(71) Applicant: Huawei Technologies Co., Ltd., Shenzhen, Guangdong 518129 (CN)
(72) Inventor: HAO, Jinping, Shenzhen, Guangdong 518129 (CN)
(74) Representative: Isarpatent
(86) International application number: PCT/CN2023/090740
(87) International publication number: WO 2023/208011

(57) **Abstract**

Embodiments of this application disclose a communication method and a communication apparatus, to ensure normal implementation of a positioning function. The method in embodiments of this application includes: A first access network device sends a radio resource control RRC release message to a terminal device via a second access network device, and sends first information to the second access network device, where the first information is used to request the second access network device to feed back, to the first access network device, information indicating whether the second access network device successfully sends the RRC release message to the terminal device, and the RRC release message includes sounding reference signal SRS configuration information of the terminal device. The first access network device receives a first message from the second access network device, where the first message is used to feed back, to the first access network device, information indicating that the second access network device successfully sends or fails to send the RRC release message to the terminal device.

## Description

This application claims priority to Chinese Patent Application No. 202210467495.3, filed with the China National Intellectual Property Administration on April 29, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A positioning function is an important function of 5th generation (5th generation, 5G) mobile communication technology new radio. A current serving access network device of a terminal device may determine sounding reference signal (sounding reference signal, SRS) configuration information for the terminal device, and send the SRS configuration information to the terminal device and a location management device. The location management device locates the terminal device based on the SRS configuration information. Therefore, how to ensure normal implementation of the positioning function is a problem worth considering.

### SUMMARY

This application provides a communication method and a communication apparatus, to ensure normal implementation of a positioning function.

A first aspect of this application provides a communication method, including:
A first access network device sends a radio resource control (radio resource control, RRC) release message to a terminal device via a second access network device, and sends first information to the second access network device, where the first information is used to request the second access network device to feed back, to the first access network device, information indicating whether the second access network device successfully sends the RRC release message to the terminal device, and the RRC release message includes sounding reference signal (sounding reference signal, SRS) configuration information of the terminal device. The first access network device receives a first message from the second access network device, where the first message is used to feed back, to the first access network device, information indicating that the second access network device successfully sends or fails to send the RRC release message to the terminal device.

It can be learned from the foregoing technical solution that the first access network device may send the first information to the second access network device. The first information is used to request the second access network device to feed back, to the first access network device, the information indicating whether the second access network device successfully sends the RRC release message to the terminal device. The RRC release message includes the SRS configuration information of the terminal device. Alternatively, the first information indicates the second access network device to feed back, to the first access network device, information indicating that the second access network device successfully sends or fails to send the configuration information to the terminal device; or the first information indicates the second access network device to feed back, to the first access network device, information indicating that the second access network device successfully configures or fails to configure an SRS for the terminal device. Then, the first access network device may receive the first message from the second access network device, where the first message is used to feed back, to the first access network device, the information indicating that the second access network device successfully sends or fails to send the RRC release message to the terminal device. Alternatively, the first message indicates, to the first access network device, information indicating that the second access network device successfully sends or fails to send the SRS configuration information to the terminal device; or the first message indicates, to the first access network device, information indicating that the second access network device successfully configures or fails to configure an SRS for the terminal device. Therefore, the first access network device may determine whether the second access network device successfully sends the RRC release message to the terminal device. In other words, the first access network device determines whether the terminal device obtains the SRS configuration information, and then sends a corresponding message to a location management device based on the first message. It is ensured that the location management device locates the terminal device after obtaining the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS. Further, the first access network device delivers the SRS configuration information via the RRC release message. Therefore, the terminal device sends the SRS in an RRC inactive state or an RRC idle state, thereby implementing low-power consumption locating of the terminal device.

In a possible implementation, the RRC release message and the first information are carried in a retrieve UE context failure message.

In this implementation, specific bearer carriers of the RRC release message and the first information are provided, to facilitate implementation of the solution. The first access network device may deliver the RRC release message and the first information in the retrieve UE context failure message, so that the first access network device indicates the second access network device to feed back a sending status of the RRC release message. In this way, the first access network device determines a status of receiving the RRC release message by the terminal device. Therefore, the first access network device determines whether the terminal device obtains the SRS configuration information, and then sends a corresponding message to a location management device based on the first message. It is ensured that the location management device locates the terminal device after obtaining the SRS configuration information. Therefore, a positioning function is normally performed.

In another possible implementation, the first information includes a first information element of the retrieve UE context failure message, or the first information includes first indication information. The first information element or the first indication information is used to request the second access network device to feed back, to the first access network device, the information indicating whether the second access network device successfully sends the RRC release message to the terminal device.

In this implementation, the first information may be a newly added information element in the retrieve UE context failure message, or may be indication information. The second access network device feeds back, to the first access network device, the information indicating whether the second access network device successfully sends the RRC release message to the terminal device. Alternatively, the second access network device feeds back, to the first access network device, information indicating that the second access network device successfully sends or fails to send the configuration information to the terminal device; or the second access network device feeds back, to the first access network device, information indicating that the second access network device successfully configures or fails to configure an SRS for the terminal device. This helps the first access network device feed back a corresponding message to a location management device, to indicate an SRS configuration status of the terminal device to the location management device.

In another possible implementation, the first message is a feedback message, an acknowledgment message, or a notification message.

In another possible implementation, if the first message is used to feed back, to the first access network device, information indicating that the second access network device successfully sends the RRC release message to the terminal device, the method further includes:
The first access network device sends a positioning information response message to the location management device, where the positioning information response message includes the SRS configuration information.

In this implementation, if the first message is used to feed back the information indicating that the second access network device successfully sends the RRC release message to the terminal device, the first access network device sends the SRS configuration information to the location management device. Alternatively, in other words, if the second access network device successfully configures an SRS for the terminal device, the first access network device may send the positioning information response message to the location management device. Therefore, when the terminal device obtains the RRC release message (including the SRS configuration information), the first access network device sends the SRS configuration information to the location management device, so that the location management device locates the terminal device based on the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS.

In another possible implementation, if the first message is used to feed back, to the first access network device, information indicating that the second access network device fails to send the RRC release message to the terminal device, the method further includes:
The first access network device sends a positioning information failure message to the location management device, where the positioning information failure message indicates that the terminal device fails to be configured with the SRS.

In this implementation, if the first message is used to feed back that the second access network device fails to send the RRC release message to the terminal device, the first access network device sends the positioning information failure message to the location management device, where the positioning information failure message indicates that the terminal device fails to be configured with the SRS. Alternatively, the positioning information failure message indicates that the first access network device fails to configure the SRS for the terminal device. Alternatively, the positioning information failure message indicates that the first access network device fails to configure the terminal device to send the SRS. In other words, the first access network device cannot configure the terminal device to send the SRS or the first access network device fails to configure the SRS for the terminal device, and the first access network device sends the positioning information failure message to the location management device. The location management device may determine that the SRS configuration fails. The location management device may take corresponding measures. For example, the location management device may select another location method to locate the terminal device. Therefore, this avoids a case in which the location management device cannot learn whether the SRS of the terminal device is successfully configured for the terminal device when the first access network device determines to retain a UE context. This avoids positioning failure when the SRS is not successfully configured for the terminal device. This can further avoid a resource waste caused when the location management device requests the access network device to measure the SRS.

A second aspect of this application provides a communication method, including:
A second access network device receives an RRC release message and first information from a first access network device, where the first information is used to request the second access network device to feed back, to the first access network device, information indicating whether the second access network device successfully sends the RRC release message to a terminal device, and the RRC release message includes SRS configuration information of the terminal device. The second access network device sends the RRC release message to the terminal device. The second access network device sends a first message to the first access network device, where the first message is used to feed back, to the first access network device, information indicating that the second access network device successfully sends or fails to send the RRC release message to the terminal device.

In the foregoing technical solution, the second access network device receives the RRC release message and the first information from the first access network device. The first information is used to request the second access network device to feed back, to the first access network device, the information indicating whether the second access network device successfully sends the RRC release message to the terminal device. Alternatively, the first information indicates the second access network device to feed back, to the first access network device, information indicating that the second access network device successfully sends or fails to send the configuration information to the terminal device; or the first information indicates the second access network device to feed back, to the first access network device, information indicating that the second access network device successfully configures or fails to configure an SRS for the terminal device. Then, the second access network device may send the RRC release message to the terminal device. The second access network device sends the first message to the first access network device, where the first message is used to feed back, to the first access network device, the information indicating that the second access network device successfully sends or fails to send the RRC release message to the terminal device. Alternatively, the first message indicates, to the first access network device, information indicating that the second access network device successfully sends or fails to send the SRS configuration information to the terminal device; or the first message indicates, to the first access network device, information indicating that the second access network device successfully configures or fails to configure an SRS for the terminal device. Therefore, the first access network device may determine whether the second access network device successfully sends the RRC release message to the terminal device. In other words, the first access network device determines whether the terminal device obtains the SRS configuration information, and then sends a corresponding message to a location management device based on the first message. It is ensured that the location management device locates the terminal device after obtaining the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS. Further, the first access network device delivers the SRS configuration information via the RRC release message. Therefore, the terminal device sends the SRS in an RRC inactive state or an RRC idle state, thereby implementing low-power consumption locating of the terminal device.

In a possible implementation, the RRC release message and the first information are carried in a retrieve UE context failure message.

In this implementation, specific bearer carriers of the RRC release message and the first information are provided, and a new message does not need to be defined, to facilitate implementation of the solution. Further, the first access network device may deliver the RRC release message and the first information in the retrieve UE context failure message, and deliver the SRS configuration information and the first information by using a process of retrieving a UE context. Therefore, the first access network device subsequently determines a status of receiving the RRC release message (including the SRS configuration information) by the terminal device, and the first access network device further determines whether the terminal device obtains the SRS configuration information, and sends a corresponding message to a location management device. It is ensured that the location management device locates the terminal device after obtaining the SRS configuration information. Therefore, a positioning function is normally performed.

In another possible implementation, the first information includes a first information element of the retrieve UE context failure message, or the first information includes first indication information. The first information element or the first indication information is used to request the second access network device to feed back, to the first access network device, the information indicating whether the second access network device successfully sends the RRC release message to the terminal device.

In this implementation, the first information may be a newly added information element in the retrieve UE context failure message, or may be indication information. The second access network device feeds back, to the first access network device, the information indicating whether the second access network device successfully sends the RRC release message to the terminal device. Alternatively, the second access network device feeds back, to the first access network device, information indicating that the second access network device successfully sends or fails to send the configuration information to the terminal device; or the second access network device feeds back, to the first access network device, information indicating that the second access network device successfully configures or fails to configure an SRS for the terminal device. This helps the first access network device feed back a corresponding message to a location management device, to indicate an SRS configuration status of the terminal device to the location management device.

In another possible implementation, the first message is a feedback message, an acknowledgment message, or a notification message.

In another possible implementation, the method further includes:
The second access network device receives a second message from the terminal device, where the second message is used to feed back, to the second access network device, information indicating that the terminal device is successfully configured or fails to be configured with the SRS.

In this implementation, the second access network device may receive the second message from the terminal device, where the second message is used to feed back, to the second access network device, the information indicating that the terminal device is successfully configured or fails to be configured with the SRS. Alternatively, the second message is used to feed back, to the second access network device, information indicating that the terminal device is successfully configured or fails to be configured to send the SRS. Alternatively, the second message is used to feed back, to the second access network device, information indicating that the terminal device is successfully or fails to be configured. This helps the second access network device determine a case in which the terminal device is configured with the SRS. The second access network device may feed back the first message to the first access network device with reference to this case, so that the first access network device learns an SRS configuration status of the terminal device.

In another possible implementation, the second message is an RRC release complete message or an RRC release accept message, and the second message is used to feed back, to the second access network device, information indicating that the terminal device is successfully configured with the SRS.

In this implementation, the terminal device feeds back, to the second access network device via the RRC release complete message or the RRC release accept message, the information indicating that the terminal device is successfully configured with the SRS, or information indicating that the terminal device is successfully configured to send the SRS, or information indicating that the terminal device is successfully configured. Therefore, the terminal device indicates, via the message itself, that the terminal device is successfully configured with the SRS or that the terminal device is successfully configured.

In another possible implementation, the second message is an RRC release configuration failure message, and the second message is used to feed back, to the second access network device, information indicating that the terminal device fails to be configured with the SRS.

In this implementation, the terminal device feeds back, to the second access network device via the RRC release configuration failure message, the information indicating that the terminal device fails to be configured with the SRS, information indicating that the terminal device fails to be configured to send the SRS, or information indicating that the terminal device fails to be configured. Therefore, the terminal device indicates, via the message itself, that the terminal device fails to be configured with the SRS or that the terminal device fails to be configured.

A third aspect of this application provides a communication method, including:
A terminal device receives an RRC release message from a second access network device, where the RRC release message includes SRS configuration information of the terminal device. The terminal device sends a second message to the second access network device, where the second message is used to feed back, to the second access network device, information indicating that the terminal device is successfully configured or fails to be configured with an SRS.

In the foregoing technical solution, the terminal device receives the RRC release message from the second access network device, where the RRC release message includes the SRS configuration information of the terminal device. The terminal device sends the second message to the second access network device, where the second message is used to feed back, to the second access network device, the information indicating that the terminal device is successfully configured or fails to be configured with the SRS. Alternatively, the second message is used to feed back, to the second access network device, information indicating that the terminal device is successfully configured or fails to be configured to send the SRS. Alternatively, the second message is used to feed back, to the second access network device, information indicating that the terminal device is successfully or fails to be configured. This helps the second access network device determine a case in which the terminal device is configured with the SRS. The second access network device may feed back a first message to the first access network device with reference to this case, so that the first access network device learns an SRS configuration status of the terminal device, and then sends a corresponding message to a location management device. It is ensured that the location management device locates the terminal device after obtaining the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS. Further, the first access network device delivers the SRS configuration information via the RRC release message. Therefore, the terminal device sends the SRS in an RRC inactive state or an RRC idle state, thereby implementing low-power consumption locating of the terminal device.

In a possible implementation, the second message is an RRC release complete message or an RRC release accept message, and the second message is used to feed back, to the second access network device, information indicating that the terminal device is successfully configured with the SRS.

In this implementation, the terminal device feeds back, to the second access network device via the RRC release complete message or the RRC release accept message, the information indicating that the terminal device is successfully configured with the SRS, or information indicating that the terminal device is successfully configured to send the SRS, or information indicating that the terminal device is successfully configured. Therefore, the terminal device indicates, via the message itself, that the terminal device is successfully configured with the SRS or that the terminal device is successfully configured.

In another possible implementation, the second message is an RRC release configuration failure message, and the second message is used to feed back, to the second access network device, information indicating that the terminal device fails to be configured with the SRS.

In this implementation, the terminal device feeds back, to the second access network device via the RRC release configuration failure message, the information indicating that the terminal device fails to be configured with the SRS, information indicating that the terminal device fails to be configured to send the SRS, or information indicating that the terminal device fails to be configured. Therefore, the terminal device indicates, via the message itself, that the terminal device fails to be configured with the SRS or that the terminal device fails to be configured.

A fourth aspect of this application provides a communication method, including:
A terminal device receives an RRC release message from an access network device, where the RRC release message includes SRS configuration information of the terminal device. The terminal device sends a first message to the access network device, where the first message is used to feed back, to the access network device, information indicating that the terminal device is successfully configured or fails to be configured with an SRS.

In the foregoing technical solution, the terminal device receives the RRC release message from the access network device, where the RRC release message includes the SRS configuration information of the terminal device. The terminal device sends the first message to the access network device, where the first message is used to feed back, to the access network device, the information indicating that the terminal device is successfully configured or fails to be configured with the SRS. Alternatively, the first message is used to feed back, to the access network device, information indicating that the terminal device is successfully configured or fails to be configured to send the SRS. Alternatively, the first message is used to feed back, to the access network device, information indicating that the terminal device is successfully or fails to be configured. Therefore, the access network device determines an SRS configuration status of the terminal device. The access network device then sends a corresponding message to a location management device. It is ensured that the location management device locates the terminal device after obtaining the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS. Further, the access network device delivers the SRS configuration information via the RRC release message. Therefore, the terminal device sends the SRS in an RRC inactive state or an RRC idle state, thereby implementing low-power consumption locating of the terminal device.

In a possible implementation, the first message is an RRC release complete message or an RRC release accept message, and the first message is used to feed back, to the access network device, information indicating that the terminal device is successfully configured with the SRS.

In this implementation, the terminal device feeds back, to the access network device via the RRC release complete message or the RRC release accept message, the information indicating that the terminal device is successfully configured with the SRS, or information indicating that the terminal device is successfully configured to send the SRS, or information indicating that the terminal device is successfully configured. Therefore, the terminal device indicates, via the message itself, that the terminal device is successfully configured with the SRS or that the terminal device is successfully configured.

In another possible implementation, the first message is an RRC release configuration failure message, and the first message is used to feed back, to the access network device, information indicating that the terminal device fails to be configured with the SRS.

In this implementation, the terminal device feeds back, to the access network device via the RRC release configuration failure message, the information indicating that the terminal device fails to be configured with the SRS, information indicating that the terminal device fails to be configured to send the SRS, or information indicating that the terminal device fails to be configured. Therefore, the terminal device indicates, via the message itself, that the terminal device fails to be configured with the SRS or that the terminal device fails to be configured.

A fifth aspect of this application provides a communication method. The communication method includes:
An access network device sends an RRC release message to a terminal device, where the RRC release message includes SRS configuration information of the terminal device. The access network device receives a first message from the terminal device, where the first message is used to feed back, to the access network device, information indicating that the terminal device is successfully configured or fails to be configured with an SRS.

In the foregoing technical solution, the access network device sends the RRC release message to the terminal device, where the RRC release message includes the SRS configuration information of the terminal device. The access network device receives the first message from the terminal device, where the first message is used to feed back, to the access network device, the information indicating that the terminal device is successfully configured or fails to be configured with the SRS. Alternatively, the first message is used to feed back, to the access network device, information indicating that the terminal device is successfully configured or fails to be configured to send the SRS. Alternatively, the first message is used to feed back, to the access network device, information indicating that the terminal device is successfully or fails to be configured. Therefore, the access network device determines an SRS configuration status of the terminal device. The access network device then sends a corresponding message to a location management device. It is ensured that the location management device locates the terminal device after obtaining the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS. Further, the access network device delivers the SRS configuration information via the RRC release message. Therefore, the terminal device sends the SRS in an RRC inactive state or an RRC idle state, thereby implementing low-power consumption locating of the terminal device.

In a possible implementation, the first message is an RRC release complete message or an RRC release accept message, and the first message is used to feed back, to the access network device, information indicating that the terminal device is successfully configured with the SRS.

In this implementation, the terminal device feeds back, to the access network device via the RRC release complete message or the RRC release accept message, the information indicating that the terminal device is successfully configured with the SRS, or information indicating that the terminal device is successfully configured to send the SRS, or information indicating that the terminal device is successfully configured. Therefore, the terminal device indicates, via the message itself, that the terminal device is successfully configured with the SRS or that the terminal device is successfully configured.

In another possible implementation, the first message is an RRC release configuration failure message, and the first message is used to feed back, to the access network device, information indicating that the terminal device fails to be configured with the SRS.

In this implementation, the terminal device feeds back, to the access network device via the RRC release configuration failure message, the information indicating that the terminal device fails to be configured with the SRS, information indicating that the terminal device fails to be configured to send the SRS, or information indicating that the terminal device fails to be configured. Therefore, the terminal device indicates, via the message itself, that the terminal device fails to be configured with the SRS or that the terminal device fails to be configured.

In another possible implementation, if the first message is used to feed back, to the access network device, the information indicating that the terminal device is successfully configured with the SRS, the method further includes: The access network device sends a positioning information response message to the location management device, where the positioning information response message includes the SRS configuration information.

In this implementation, if the first message is used to feed back, to the access network device, the information indicating that the terminal device is successfully configured with the SRS, the access network device sends the positioning information response message to the location management device, where the positioning information response message includes the SRS configuration information. Alternatively, in other words, if the second access network device successfully configures an SRS for the terminal device, the first access network device may send the positioning information response message to the location management device. Therefore, when the terminal device is successfully configured with the SRS, the access network device sends the SRS configuration information to the location management device, so that the location management device locates the terminal device based on the SRS configuration information. Therefore, a positioning function is normally performed. This avoids failure of locating the terminal device by the location management device when the SRS configuration information is not successfully configured for the terminal device. This can further avoid a resource waste of the access network device caused when the location management device requests the access network device to measure the SRS.

In another possible implementation, if the first message is used to feed back, to the access network device, the information indicating that the terminal device fails to be configured with the SRS, the method further includes: The access network device sends a positioning information failure message to the location management device, where the positioning information failure message indicates that the terminal device fails to be configured with the SRS.

In this implementation, if the first message is used to feed back, to the access network device, the information indicating that the terminal device fails to be configured with the SRS, the access network device sends the positioning information failure message to the location management device, where the positioning information failure message indicates that the terminal device fails to be configured with the SRS. Alternatively, the positioning information failure message indicates that the first access network device fails to configure the SRS for the terminal device. Alternatively, the positioning information failure message indicates that the first access network device fails to configure the terminal device to send the SRS. In other words, the first access network device cannot configure the terminal device to send the SRS or the first access network device fails to configure the SRS for the terminal device, and the first access network device sends the positioning information failure message to the location management device. The location management device may determine that the SRS configuration fails. The location management device may take corresponding measures. For example, the location management device may select another location method to locate the terminal device. This avoids that the location management device cannot learn whether the SRS of the terminal device is successfully configured for the terminal device. This avoids positioning failure when the SRS is not successfully configured for the terminal device and a resource waste caused when the location management device requests the access network device to measure the SRS.

A sixth aspect of this application provides a communication apparatus, including:
a sending unit, configured to: send an RRC release message to a terminal device via a second access network device, and send first information to the second access network device, where the first information is used to request the second access network device to feed back, to the communication apparatus, information indicating whether the second access network device successfully sends the RRC release message to the terminal device, and the RRC release message includes SRS configuration information of the terminal device; and
a receiving unit, configured to receive the first message from the second access network device, where the first message is used to feed back, to the communication apparatus, information indicating that the second access network device successfully sends or fails to send the RRC release message to the terminal device.

In a possible implementation, the RRC release message and the first information are carried in a retrieve UE context failure message.

In another possible implementation, the first information includes a first information element of the retrieve UE context failure message, or the first information includes first indication information. The first information element or the first indication information is used to request the second access network device to feed back, to the communication apparatus, the information indicating whether the second access network device successfully sends the RRC release message to the terminal device.

In another possible implementation, the first message is a feedback message, an acknowledgment message, or a notification message.

In another possible implementation, if the first message is used to feed back, to the communication apparatus, information indicating that the second access network device successfully sends the RRC release message to the terminal device, the sending unit is further configured to:
send a positioning information response message to a location management device, where the positioning information response message includes the SRS configuration information.

In another possible implementation, if the first message is used to feed back, to the communication apparatus, information indicating that the second access network device fails to send the RRC release message to the terminal device, the sending unit is further configured to:
send a positioning information failure message to a location management device, where the positioning information failure message indicates that the terminal device fails to be configured with an SRS.

A seventh aspect of this application provides a communication apparatus, including:
a receiving unit, configured to receive an RRC release message and first information from a first access network device, where the first information is used to request the communication apparatus to feed back, to the first access network device, information indicating whether the communication apparatus successfully sends the RRC release message to a terminal device, and the RRC release message includes SRS configuration information of the terminal device; and
a sending unit, configured to: send the RRC release message to the terminal device, send a first message to the first access network device, where the first message is used to feed back, to the first access network device, information indicating that the communication apparatus successfully sends or fails to send the RRC release message to the terminal device.

In a possible implementation, the RRC release message and the first information are carried in a retrieve UE context failure message.

In another possible implementation, the first information includes a first information element of the retrieve UE context failure message, or the first information includes first indication information. The first information element or the first indication information is used to request the communication apparatus to feed back, to the first access network device, the information indicating whether the communication apparatus successfully sends the RRC release message to the terminal device.

In another possible implementation, the first message is a feedback message, an acknowledgment message, or a notification message.

In another possible implementation, the receiving unit is further configured to:
receive a second message from the terminal device, where the second message is used to feed back, to the communication apparatus, information indicating that the terminal device is successfully configured or fails to be configured with an SRS.

In another possible implementation, the second message is an RRC release complete message or an RRC release accept message, and the second message is used to feed back, to the communication apparatus, information indicating that the terminal device is successfully configured with the SRS.

In another possible implementation, the second message is an RRC release configuration failure message, and the second message is used to feed back, to the communication apparatus, information indicating that the terminal device fails to be configured with the SRS.

An eighth aspect of this application provides a communication apparatus, including:
a receiving unit, configured to receive an RRC release message from a second access network device, where the RRC release message includes SRS configuration information of a communication apparatus; and
a sending unit, configured to send a second message to the second access network device, where the second message is used to feed back, to the second access network device, information indicating that the communication apparatus is successfully configured or fails to be configured with an SRS.

In a possible implementation, the second message is an RRC release complete message or an RRC release accept message, and the second message is used to feed back, to the second access network device, information indicating that the communication apparatus is successfully configured with the SRS.

In another possible implementation, the second message is an RRC release configuration failure message, and the second message is used to feed back, to the second access network device, information indicating that the communication apparatus fails to be configured with the SRS.

A ninth aspect of this application provides a communication apparatus, including:
a receiving unit, configured to receive an RRC release message from an access network device, where the RRC release message includes SRS configuration information of a communication apparatus; and
a sending unit, configured to send a first message to the access network device, where the first message is used to feed back, to the access network device, information indicating that the communication apparatus is successfully configured or fails to be configured with an SRS.

In a possible implementation, the first message is an RRC release complete message or an RRC release accept message, and the first message is used to feed back, to the access network device, information indicating that the communication apparatus is successfully configured with the SRS.

In another possible implementation, the first message is an RRC release configuration failure message, and the first message is used to feed back, to the access network device, information indicating that the communication apparatus fails to be configured with the SRS.

A tenth aspect of this application provides a communication apparatus, including:
a sending unit, configured to send an RRC release message to a terminal device, where the RRC release message includes SRS configuration information of the terminal device; and
a receiving unit, configured to receive a first message from the terminal device, where the first message is used to feed back, to the communication apparatus, information indicating that the terminal device is successfully configured or fails to be configured with an SRS.

In a possible implementation, the first message is an RRC release complete message or an RRC release accept message, and the first message is used to feed back, to the communication apparatus, information indicating that the terminal device is successfully configured with the SRS.

In another possible implementation, the first message is an RRC release configuration failure message, and the first message is used to feed back, to the communication apparatus, information indicating that the terminal device fails to be configured with the SRS.

In another possible implementation, if the first message is used to feed back, to the communication apparatus, the information indicating that the terminal device is successfully configured with the SRS, the sending unit is further configured to:
send a positioning information response message to a location management device, where the positioning information response message includes the SRS configuration information.

In another possible implementation, if the first message is used to feed back, to the communication apparatus, the information indicating that the terminal device fails to be configured with the SRS, the sending unit is further configured to:
send a positioning information failure message to the location management device, where the positioning information failure message indicates that the terminal device fails to be configured with the SRS.

An eleventh aspect of this application provides a communication apparatus. The communication apparatus includes a processor. The processor is configured to invoke a computer program or computer instructions stored in a memory, so that the processor implements any one of the implementations in any one of the first aspect to the tenth aspect.

Optionally, the communication apparatus further includes a transceiver, and the processor is configured to control the transceiver to perform any one of the implementations in any one of the first aspect to the tenth aspect.

Optionally, the communication apparatus further includes the memory, and the memory stores the computer program or computer instructions.

Optionally, the processor and the memory are integrated together.

A twelfth aspect of embodiments of this application provides a computer program product including computer instructions. When the computer program product runs on a computer, the computer is enabled to perform any one of the implementations in any one of the first aspect to the tenth aspect.

A thirteenth aspect of embodiments of this application provides a computer-readable storage medium, including computer instructions. When the computer instructions are run on a computer, the computer is enabled to perform any one of the implementations in any one of the first aspect to the tenth aspect.

A fourteenth aspect of embodiments of this application provides a chip apparatus, including a processor, configured to invoke a computer program or computer instructions in a memory, so that the processor performs any one of the implementations in any one of the first aspect to the tenth aspect.

Optionally, the processor is coupled to the memory through an interface.

According to the foregoing technical solution, it can be learned that embodiments of this application have the following advantages.

In the foregoing technical solution, the first access network device may send the first information to the second access network device. The first information is used to request the second access network device to feed back, to the first access network device, the information indicating whether the second access network device successfully sends the RRC release message to the terminal device. The RRC release message includes the SRS configuration information of the terminal device. The first access network device may receive the first message from the second access network device, where the first message is used to feed back, to the first access network device, the information indicating that the second access network device successfully sends or fails to send the RRC release message to the terminal device. Therefore, the first access network device determines whether the terminal device obtains the SRS configuration information. Then, the first access network device may send the corresponding message to the location management device based on the first message. Therefore, it is ensured that the terminal device obtains the SRS configuration information. It is ensured that the location management device locates the terminal device after obtaining the SRS configuration information. Therefore, the positioning function is normally performed. This avoids failure of locating the terminal device by the location management device when the SRS configuration information is not successfully configured for the terminal device. This can further avoid a resource waste of the access network device caused when the location management device requests the access network device to measure the SRS.

### BRIEF DESCRIPTION OF DRAWINGS

FIG. 1 is a diagram of a communication system according to an embodiment of this application;
FIG. 2 is a diagram of an embodiment of a communication method according to an embodiment of this application;
FIG. 3 is a diagram of another embodiment of a communication method according to an embodiment of this application;
FIG. 4 is a diagram of another embodiment of a communication method according to an embodiment of this application;
FIG. 5 is a diagram of a structure of a communication apparatus according to an embodiment of this application;
FIG. 6 is another diagram of a structure of a communication apparatus according to an embodiment of this application;
FIG. 7 is another diagram of a structure of a communication apparatus according to an embodiment of this application;
FIG. 8 is a diagram of a structure of a terminal device according to an embodiment of this application; and
FIG. 9 is another diagram of a structure of a communication apparatus according to an embodiment of this application.

### DESCRIPTION OF EMBODIMENTS

Embodiments of this application provide a communication method and a communication apparatus, to ensure normal implementation of a positioning function.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

The technical solutions provided in this application may be applied to various communication systems, for example, a 5th generation (5th generation, 5G) mobile communication system, a new radio (new radio, NR) system, a long-term evolution (long-term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle-to-everything (vehicle-to-everything, V2X) communication system.

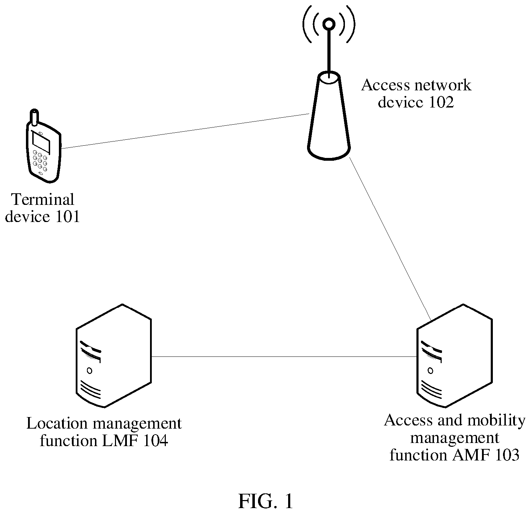

FIG. 1 is a diagram of a communication system according to an embodiment of this application. The communication system includes an access network device 102, an access and mobility management function (access and mobility management function, AMF) 103, and a location management function (location management function, LMF) 104.

Optionally, a terminal device 101 is connected to the access network device 102 through an interface, the access network device is connected to the AMF 103 through an interface, and the AMF 104 is connected to the LMF 104 through an interface. The LMF 104 is configured to perform positioning calculation and management on a location of the terminal device 101.

For example, the terminal device 101 is connected to the access network device 103 through an NR-Uu interface, and the access network device 102 is connected to the AMF 103 through an NG-C interface. The AMF 103 is connected to the LMF 104 through an NL1 interface.

FIG. 1 shows only an example in which the communication system includes the access network device 102. In actual application, the communication system may further include more access network devices. This is not specifically limited in this application.

The following describes the access network device and the terminal device that are provided in this application.

The access network device is an apparatus deployed in a radio access network for providing a wireless communication function for the terminal device. The access network device may include a base station. The base station includes a macro base station, a micro base station (also referred to as a small cell), a relay station, an access point (access point, AP), a wearable device, an in-vehicle device, and the like in various forms. The base station may further include a transmission reception point (transmission reception point, TRP), a transmission measurement function (transmission measurement function, TMF), and the like. For example, the base station related in this application may be a base station in new radio (new radio, NR). The base station in the 5G NR may further include a transmission reception point (transmission reception point, TRP), a transmission point (transmission point, TP), a next generation NodeB (next Generation NodeB, gNB), or an evolved NodeB (evolved NodeB, eNB or eNodeB) in a long-term evolution (long-term evolution, LTE) system.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or an in-vehicle device having a wireless connection function. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The AMF 103 is responsible for access control, registration management, service management, mobility management, and the like for the terminal device to access a network.

The LMF 104 may be deployed in a core network, and is configured to perform positioning calculation and management on a location of the terminal device.

In this application, a name of the AMF 103 may change with evolution of the communication system. In a current communication system or a future communication system, a functional network element that has another name and that has a function similar to that of the AMF 103 may be understood as the AMF 103 in this application. The AMF 103 is applicable to the communication method provided in embodiments of this application.

In this application, the LMF is a name in the current communication system. In the future communication system, a name of the LMF may change with evolution of the communication system. Therefore, the LMF is referred to as a location management device in the following to describe the technical solutions of this application. The location management device is configured to perform positioning calculation on a location of the terminal device. The location management device may be deployed in an access network or a core network. This is not specifically limited in this application. In a current communication system or a future communication system, a functional network element that has another name and that has a function similar to that of the location management device may be understood as the location management device in this application. The location management device is applicable to the communication method provided in this application.

The following first describes three possible RRC states of the terminal device. The three RRC states are: an RRC connected (RRC connected) state, an RRC inactive (RRC inactive) state, and an RRC idle (RRC idle) state, respectively.

RRC connected state: There is an RRC connection between a terminal device and an access network device, and a connection between the access network device and a core network is established for the terminal device. The access network device stores a UE context of the terminal device. In the RRC connected state, the access network device and the terminal device can send a unicast message through the RRC connection.

RRC inactive state: An RRC connection between a terminal device and an access network device is suspended (suspend), and a connection between the access network device and a core network is established for the terminal device. The access network device stores a UE context of the terminal device. The terminal device may receive a broadcast message and a paging message. The paging message is initiated by the access network device.

RRC idle state: No RRC connection is established between a terminal device and an access network device, and no connection between the access network device and a core network is established for the terminal device. The access network device does not have a UE context of the terminal device. The terminal device may receive a broadcast message and a paging message. The paging message is initiated by the core network.

When the terminal device is in the RRC inactive state or the RRC idle state, and the terminal device moves from a last serving access network device to a new access network device (which may also be referred to as a current serving access network device), the location management device requests the last serving access network device to locate the terminal device, and a coordination problem between the last serving access network device and the current serving access network device is involved.

The following describes two possible scenarios.

Scenario 1: The terminal device is in the RRC inactive state, and the location management device determines to locate the terminal device. The location management device may send a positioning information request message to the last serving access network device. Because the terminal device has moved to the current serving access network device, the current serving access network device needs to determine SRS configuration information for the terminal device. Therefore, the last serving access network device sends a positioning request of the location management device to the current serving access network device. After determining the SRS configuration information for the terminal device, the current serving access network device may send the SRS configuration information to the last serving access network device. Then, the last access network device sends the SRS configuration information to the location management device. Therefore, the location management device locates the terminal device based on the SRS configuration information.

Scenario 2: The terminal device is in the RRC inactive state, and the terminal device sends an event report to the location management device based on small data transmission (small data transmission, SDT). In a process of forwarding the event report, the current serving access network device may select to retain a UE context. After the location management device receives the event report, the location management device may send a positioning information request message to the last serving access network device. Then, the last serving access network device sends a positioning request of the location management device to the current serving access network device. After the current serving access network device determines SRS configuration information for the terminal device, the current serving access network device may send the SRS configuration information to the last serving access network device. Then, the last serving access network device sends the SRS configuration information to the location management device. Therefore, the location management device locates the terminal device based on the SRS configuration information.

In the foregoing scenario 1 and scenario 2, the last serving access network device may deliver the SRS configuration information to the terminal device via an RRC release message. The last serving access network device sends the SRS configuration information to the location management device. However, in the foregoing scenario 1 or scenario 2, the last serving access network device sends the RRC release message to the terminal device via the current serving access network device. The last serving access network device cannot learn whether the current serving access network device successfully sends the RRC release message to the terminal device.

Therefore, in the foregoing scenario 1 and scenario 2, if the terminal device does not receive the SRS configuration information of the current serving access network device, the terminal device cannot send an SRS. However, the last serving access network device sends the SRS configuration information to the location management device, and the location management device locates the terminal device based on the SRS configuration information. Consequently, a positioning function cannot be normally performed, and the terminal device cannot be located. In addition, if the location management device requests at least one corresponding access network device to perform positioning measurement on the SRS of the terminal device, a resource waste of the access network device is caused.

In addition, the current serving access network device sends the RRC release message to the terminal device. The RRC release message includes the SRS configuration information of the terminal device. The current serving access network device may determine whether the terminal device successfully receives the RRC release message. However, the current serving access network device cannot learn whether the terminal device is successfully configured with the SRS. For example, the terminal device cannot send the SRS based on the SRS configuration information, and consequently, the terminal device fails to be configured with the SRS. However, the last serving access network device sends the SRS configuration information to the location management device, and the location management device locates the terminal device based on the SRS configuration information. Consequently, a positioning function cannot be normally performed, and the terminal device cannot be located.

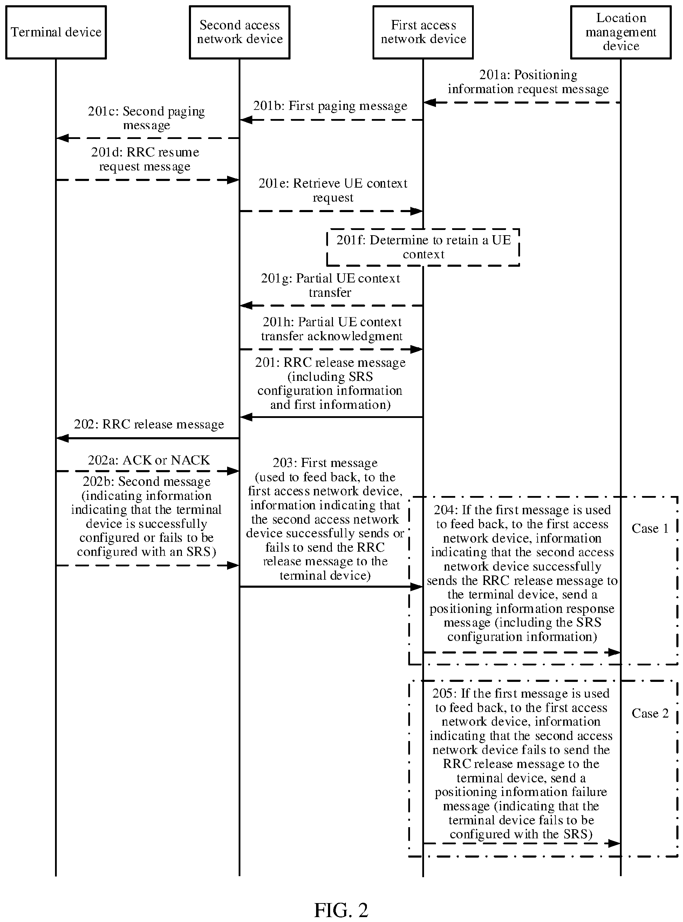

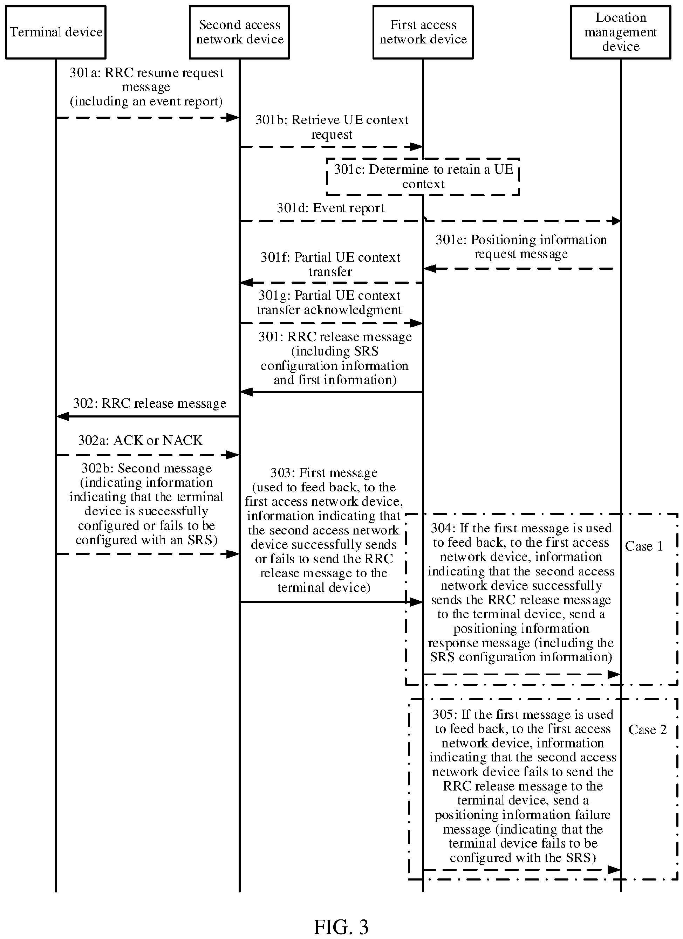

This application provides a corresponding technical solution, to ensure normal implementation of a positioning function and avoid a resource waste. For details, refer to related descriptions of embodiments shown in FIG. 2 and FIG. 3 below.

The technical solution of this application is described below with reference to specific embodiments.

FIG. 2 is a diagram of an embodiment of a communication method according to an embodiment of this application. Refer to FIG. 2. The communication method includes the following steps.

201: A first access network device sends an RRC release message and first information to a second access network device. Correspondingly, the second access network device receives the RRC release message and the first information from the first access network device.

The RRC release (radio resource control release, RRC release) message includes SRS configuration information of a terminal device.

The first information is used to request the second access network device to feed back, to the first access network device, information indicating whether the second access network device successfully sends the release message to the terminal device. Alternatively, the first information indicates the second access network device to feed back, to the first access network device, information indicating whether the second access network device successfully sends the release message to the terminal device. Alternatively, the first information indicates the second access network device to feed back, to the first access network device, information indicating that the second access network device successfully sends or fails to send the SRS configuration information to the terminal device. Alternatively, the first information indicates the second access network device to feed back, to the first access network device, information indicating that the second access network device successfully configures or fails to configure an SRS for the terminal device.

Specifically, the first access network device determines the SRS configuration information for the terminal device. The SRS configuration information is used by the terminal device to send the SRS, so that the access network device measures the SRS and reports a measurement result to a location management device. Therefore, the location management device locates the terminal device. The first access network device sends the RRC release message to the terminal device and sends the first information to the second access network device via the second access network device.

The following describes some implementations of the first information.
1. The first information includes a first information element in a retrieve context failure message, and the first information element is used to request the second access network device to feed back, to the first access network device, the information indicating whether the second access network device successfully sends the RRC release message to the terminal device. Alternatively, the first information element indicates the second access network device to feed back, to the first access network device, the information indicating whether the second access network device successfully sends the RRC release message to the terminal device. Alternatively, the first information element indicates the second access network device to feed back, to the first access network device, information indicating that the second access network device successfully sends or fails to send the SRS configuration information to the terminal device. Alternatively, the first information element indicates the second access network device to feed back, to the first access network device, information indicating that the second access network device successfully configures or fails to configure an SRS for the terminal device.

For example, the first information element may be a feedback required (feedback required) information element, an SRS included (SRS included) information element, or a positioning information included (positioning information included) information element. The second access network device requests or indicates, via the first information element, the second access network device to feed back, to the first access network device, the information indicating whether the second access network device successfully sends the RRC release message to the terminal device.

It should be noted that a name of the first information element is not limited in this application. The foregoing descriptions are merely some examples, and do not constitute a limitation on this application. The first information element may be understood as a newly added information element in the retrieve context failure message.

For example, the first information element is a feedback required information element, and a value of the feedback required information element is "true (true)". Details are shown in the following Table 1.

**Table 1**

| Information element | |
|---|---|
| Feedback required information element | Enumerated (true) |

2. The first information includes first indication information, and the first indication information indicates the second access network device to feed back, to the first access network device, the information indicating whether the second access network device successfully sends the RRC release message to the terminal device. Alternatively, the first indication information indicates the second access network device to feed back, to the first access network device, information indicating that the second access network device successfully sends or fails to send the SRS configuration information to the terminal device. Alternatively, the first indication information indicates the second access network device to feed back, to the first access network device, information indicating that the second access network device successfully configures or fails to configure an SRS for the terminal device.

For example, when a value of the first indication information is "true", it indicates the second access network device to feed back, to the first access network device, the information indicating whether the second access network device successfully sends the RRC release message to the terminal device. For another example, when a value of the indication information is "1", it indicates the second access network device to feed back, to the first access network device, the information indicating whether the second access network device successfully sends the RRC release message to the terminal device.

The first access network device is an access network device that lastly serves the terminal device. The first access network device stores a context of the terminal device and an NG connection associated with a terminal device between the first access network device and an AMF. The first access network device may be referred to as a last serving access network device (last serving RAN) of the terminal device.

The second access network device is a current serving access network device of the terminal device. In other words, the second access network device is an access network device on which the terminal device camps.

In a possible implementation, the RRC release message is used by the first access network device to release the terminal device to be in an RRC inactive state or an RRC idle state. Therefore, the location management device locates the terminal device when the terminal device is in the RRC inactive state or the RRC idle state, thereby implementing low-power consumption locating. The following describes the technical solution of this application by using an example in which the RRC release message is used by the first access network device to release the terminal device to be in the RRC inactive state.

It should be noted that, in step 201, the first access network device delivers the SRS configuration information via the RRC release message. In actual application, the first access network device may deliver the SRS configuration information via another RRC message (for example, an RRC reconfiguration message). This is not specifically limited in this application. The first information is used to request the second access network device to feed back, to the first access network device, information indicating whether the second access network device successfully sends the RRC message to the terminal device. The following describes the technical solution of this application by using an example in which the first access network device delivers the SRS configuration information via the RRC release message.

It should be noted that the first access network device may send the RRC release message and the first information together, or may separately send the RRC release message and the first information. This is not specifically limited in this application.

Optionally, when the first access network device sends the RRC release message and the first information together, the RRC release message and the first information are carried in the retrieve context failure (retrieve UE context failure) message.

Optionally, the location management device may send a positioning information request to the first access network device, to request to configure the SRS for the terminal device. The following describes the implementation process with reference to step 201a to step 201f.

201a: The location management device sends the positioning information request message to the first access network device. Correspondingly, the first access network device receives the positioning information request message from the location management device.

The positioning information request (positioning information request) message is used to request to configure the SRS for the terminal device.

Optionally, the positioning information request message is carried in a new radio positioning protocol A (new radio positioning protocol A, NRPPa) message. The positioning information request message includes related information of the SRS that the location management device requests to configure for the terminal device.

Specifically, the location management device determines to locate the terminal device, and the location management device may send the positioning information request message to the last serving access network device (that is, the first access network device) of the terminal device.

201b: The first access network device sends a first paging message to the second access network device. Correspondingly, the second access network device receives the first paging message from the first access network device.

The first paging (RAN Paging) message is used by the first access network device to page the second access network device, so that the first access network device pages the terminal device via the second access network device.

Specifically, because the terminal device moves to a cell of the second access network device, the first access network device may page the second access network device via the first paging message, and therefore page the terminal device via the second access network device.

201c: The second access network device sends a second paging message to the terminal device. Correspondingly, the terminal device receives the second paging message from the second access network device.

The second paging (Paging) message is used by the second access network device to page the terminal device.

201d: The terminal device sends an RRC resume request message to the second access network device. Correspondingly, the second access network device receives the RRC resume request message from the terminal device.

The RRC resume request (RRC resume request) message is used to request to resume an RRC connected state of the terminal device.

201e: The second access network device sends a retrieve UE context request message to the first access network device. Correspondingly, the first access network device receives the retrieve UE context request message from the second access network device.

The retrieve UE context request (retrieve UE context request) message is used to request a UE context of the terminal device.

201f: The first access network device determines to retain the UE context.

Specifically, the first access network device does not expect to transfer the UE context to the second access network device.

201g: The first access network device sends partial UE context transfer to the second access network device. Correspondingly, the second access network device receives the partial UE context transfer from the first access network device.

The partial UE context transfer (partial UE context transfer) includes positioning information. The positioning information includes related information of the SRS that the location management device requests to configure for the terminal device.

201h: The second access network device sends a partial UE context transfer acknowledgment to the first access network device. Correspondingly, the first access network device receives the partial UE context transfer acknowledgment from the second access network device.

The partial UE context transfer acknowledgment (partial UE context transfer ACK) indicates that the first access network device receives the partial UE context transfer. The partial UE context transfer acknowledgment includes the SRS configuration information.

Specifically, after the second access network device receives the partial UE context transfer, the second access network device may determine related information of the SRS that the location management device requests to configure for the terminal device. The second access network device determines the SRS configuration information for the terminal device based on the related information of the SRS. The first access network device may send the partial UE context transfer acknowledgment to the second access network device. The partial UE context transfer acknowledgment includes the SRS configuration information.

202: The second access network device sends the RRC release message to the terminal device. Correspondingly, the first access network device receives the RRC release message from the second access network device.

Specifically, the RRC release message includes the SRS configuration information of the terminal device. The RRC release message is used by the first access network device to release the terminal device to be in the RRC inactive state. Therefore, the terminal device is configured to send the SRS in the RRC inactive state, to implement low-power consumption locating.

Optionally, the embodiment shown in FIG. 2 further includes step 202a. Step 202a may be performed after step 202.

202a: The terminal device sends an acknowledgment (acknowledgment, ACK) or a negative acknowledgment (negative acknowledgment, NCAK) to the second access network device. Correspondingly, the second access network device receives the ACK or the NACK from the terminal device.

The ACK indicates that the terminal device successfully receives a data packet including the RRC release message. The NACK indicates that the terminal device fails to receive a data packet including the RRC release message.

Specifically, if the terminal device successfully receives the RRC release message, the terminal device sends the ACK to the second access network device. If the terminal device receives the RRC release message, the terminal device sends the NACK to the second access network device.

Optionally, the embodiment shown in FIG. 2 further includes step 202b. Step 202b may be performed after step 202.

202b: The terminal device sends a second message to the second access network device. Correspondingly, the second access network device receives the second message from the terminal device.

The second message indicates information indicating that the terminal device is successfully configured or fails to be configured with the SRS. Alternatively, the second message is used to feed back, to the second access network device, information indicating that the terminal device is successfully configured or fails to be configured to send the SRS. Alternatively, the second message is used to feed back, to the second access network device, information indicating that the terminal device is successfully or fails to be configured.

Specifically, the terminal device receives the RRC release message. The terminal device determines the SRS configuration information via the RRC release message. If the terminal device may send the SRS based on the SRS configuration information, the terminal device may send the second message to the second access network device. The second message indicates information indicating that the terminal device is successfully configured with the SRS. In other words, the second access network device indicates, via the second message, that the terminal device is successfully configured to send the SRS. Alternatively, the second access network device indicates, via the second message, that the terminal device is successfully configured. If the terminal device cannot send the SRS based on the SRS configuration information, the terminal device may send the second message to the second access network device, where the second message indicates information indicating that the terminal device fails to be configured with the SRS. In other words, the second access network device indicates, via the second message, that the terminal device fails to be configured to send the SRS. Alternatively, the second access network device indicates, via the second message, that the terminal device fails to be configured.

Optionally, the second message may be an RRC message or a media access control (media access control, MAC) message.

For example, the second message is an RRC release complete (RRC release complete) message or an RRC release accept (RRC release accept) message. The RRC release complete message or the RRC release accept message indicates the information indicating that the terminal device is successfully configured with the SRS, or information notifying that the terminal device is successfully configured with the SRS, or information indicating that the terminal device is successfully configured, or information indicating that the terminal device is successfully configured to send the SRS.

For example, the second message is an RRC release configuration failure (RRC Release configuration failure) message. The RRC release configuration failure message indicates the information indicating that the terminal device fails to be configured with the SRS, or information notifying the second access network device that the terminal device fails to be configured with the SRS, or information indicating that the terminal device fails to be configured, or information indicating that the terminal device fails to be configured to send the SRS.

For example, the second message may be a media access control control element (media access control control element, MAC CE).

203: The second access network device sends a first message to the first access network device. Correspondingly, the first access network device receives the first message from the first access network device.

The first message is used to feed back, to the first access network device, information indicating that the second access network device successfully sends or fails to send the RRC release message to the terminal device. Alternatively, the first message notifies, to the first access network device, information indicating that the second access network device successfully sends or fails to send the RRC release message to the terminal device. Alternatively, the first message indicates, to the first access network device, information indicating that the second access network device successfully sends or fails to send the RRC release message to the terminal device.

In this implementation, if the second access network device successfully sends the RRC release message to the terminal device, the second access network device may send the first message to the first access network device. Therefore, the second access network device feeds back, to the first access network device, whether the second access network device successfully sends or fails to send the RRC release message to the terminal device.

From another perspective, the first message indicates, to the first access network device, information indicating that the second access network device successfully sends or fails to send the SRS configuration information to the terminal device. Alternatively, the first message indicates, to the first access network device, information indicating that the second access network device successfully configures or fails to configure the SRS for the terminal device.

In this implementation, if the second access network device successfully sends the RRC release message to the terminal device, the second access network device may consider by default that the second access network device successfully configures the SRS for the terminal device, or the second access network device may consider by default that the second access network device successfully sends the SRS configuration information to the terminal device. In this case, the second access network device may send the first message to the first access network device, to feed back, to the first access network device, information indicating that the second access network device successfully sends or fails to send the SRS configuration information to the terminal device or information indicating that the second access network device successfully configures or fails to configure the SRS for the terminal device.

Optionally, the first message is a feedback (feedback) message, an acknowledgment message, or a notification message.

For example, the first message is used to feed back, to the first access network device, information indicating that the second access network device successfully sends the RRC release message to the terminal device. The first message is a UE message delivery success notification (UE message delivery success notify) message.

For example, the first message is used to feed back, to the first access network device, information indicating that the second access network device fails to send the RRC release message to the terminal device. The first message is a UE message delivery failure (RRC message delivery failure notify) message.

For example, if the terminal device successfully receives the RRC release message, the second access network device may send the first message to the first access network device. The first message is used to feed back, to the first access network device, the information indicating that the second access network device successfully sends the RRC release message to the terminal device. If the terminal device fails to receive the RRC release message, the second access network device may send the first message to the first access network device. The first message is used to feed back, to the first access network device, the information indicating that the second access network device fails to send the RRC release message to the terminal device.

It should be noted that, if the first access network device delivers the SRS configuration information to the second access network device via another RRC message (for example, an RRC reconfiguration message), and the second access network device sends the SRS configuration information to the terminal device via the RRC reconfiguration message, the terminal device may send an RRC reconfiguration complete message to the second access network device, where the RRC reconfiguration complete message indicates information indicating that the terminal device successfully receives or fails to receive the RRC message. In this case, the first message is used to feed back, to the first access network device, information indicating that the second access network device successfully sends or fails to send the RRC message to the terminal device.

Optionally, based on the foregoing step 202b, if the second message indicates information indicating that the terminal device is successfully configured with the SRS, the second access network device sends the first message to the first access network device. The first message is used to feed back, to the first access network device, the information indicating that the second access network device successfully sends the RRC release message to the terminal device. Alternatively, the first message is used to feed back, to the first access network device, the information indicating that the second access network device successfully configures the SRS for the terminal device. If the second message indicates information indicating that the terminal device fails to be configured with the SRS, the second access network device sends the first message to the first access network device. The first message is used to feed back, to the first access network device, the information indicating that the second access network device fails to send the RRC release message to the terminal device. Alternatively, the first message is used to feed back, to the first access network device, the information indicating that the second access network device fails to configure the SRS for the terminal device.

Optionally, the first access network device may feed back a corresponding message to the location management device based on the first message, so that the location management device determines an SRS configuration status of the terminal device. Optionally, the embodiment shown in FIG. 2 further includes step 204 or step 205. Step 204 or step 205 may be performed after step 203.

204: If the first message is used to feed back, to the first access network device, the information indicating that the second access network device successfully sends the RRC release message to the terminal device, the first access network device sends a positioning information response message to the location management device. Correspondingly, the location management device receives the positioning information response message from the first access network device.

The positioning information response (positioning information response) message includes the SRS configuration information of the terminal device.

Specifically, if the first message indicates the information indicating that the second access network device successfully sends the RRC release message to the terminal device, the first access network device may send the positioning information response message to the location management device. The positioning information response message includes the SRS configuration information of the terminal device. In other words, if the first access network device successfully configures the terminal device to send the SRS or the first access network device successfully configures the SRS for the terminal device, the first access network device sends the positioning information response message to the location management device. Therefore, the location management device locates the terminal device based on the SRS configuration information. For example, the location management device may select at least one access network device, and measure, via the at least one access network device, the SRS sent by the terminal device, to obtain a measurement result. Then, the at least one access network device sends the measurement result to the location management device. The location management device locates the terminal device based on the measurement result.

205: If the first message is used to feed back, to the first access network device, the information indicating that the second access network device fails to send the RRC release message to the terminal device, the first access network device sends a positioning information failure message to the location management device. Correspondingly, the location management device receives the positioning information failure message from the first access network device.

The positioning information failure message indicates that the terminal device fails to be configured with the SRS. Alternatively, the positioning information failure message indicates that the first access network device fails to configure the SRS for the terminal device. Alternatively, the positioning information failure message indicates that the first access network device fails to configure the terminal device to send the SRS.

Specifically, if the first message indicates the information indicating that the second access network device fails to send the RRC release message to the terminal device, the first access network device may send the positioning information failure message to the location management device. The positioning information failure message indicates that the terminal device fails to be configured with the SRS. In other words, the first access network device cannot configure the terminal device to send the SRS or the first access network device fails to configure the SRS for the terminal device, and the first access network device sends the positioning information failure message to the location management device. In this way, the location management device may take corresponding measures. For example, the location management device may select another location method to locate the terminal device. Therefore, this avoids a case in which the location management device cannot learn whether the SRS of the terminal device is successfully configured for the terminal device when the first access network device determines to retain the UE context. This avoids positioning failure when the SRS is not successfully configured for the terminal device. This can further avoid a resource waste caused when the location management device requests the access network device to measure the SRS.

In this embodiment of this application, the first access network device may send the first information to the second access network device. The first information is used to request the second access network device to feed back, to the first access network device, the information indicating whether the second access network device successfully sends the RRC release message to the terminal device. The RRC release message includes the SRS configuration information of the terminal device. The first access network device may receive the first message from the second access network device, where the first message is used to feed back, to the first access network device, the information indicating that the second access network device successfully sends or fails to send the RRC release message to the terminal device, or the information indicating that the second access network device successfully sends or fails to send the SRS configuration information to the terminal device. In this way, the first access network device may determine whether the second access network device successfully sends the RRC release message to the terminal device. Therefore, the first access network device determines whether the terminal device obtains the SRS configuration information. The first access network device may determine, based on the first message, whether to send the SRS configuration information to the location management device. Therefore, it is ensured that the location management device locates the terminal device after obtaining the SRS configuration information. Therefore, the positioning function is normally performed. This avoids failure of locating the terminal device by the location management device when the SRS configuration information is not successfully configured for the terminal device. This can further avoid a resource waste of the access network device caused when the location management device requests the access network device to measure the SRS.

FIG. 3 is a diagram of another embodiment of a communication method according to an embodiment of this application. Refer to FIG. 3. The communication method includes the following steps.

301: A first access network device sends an RRC release message and first information to a second access network device. Correspondingly, the second access network device receives the RRC release message and the first information from the first access network device.

Step 301 is similar to step 201 in the embodiment shown in FIG. 2 above. For details, refer to related descriptions of step 201 in the embodiment shown in FIG. 2 above. Details are not described herein again.

Optionally, when a terminal device is in an RRC inactive state, the terminal device sends an event report to a location management device based on SDT. Optionally, the embodiment shown in FIG. 3 further includes step 301a to step 301h. Step 301a to step 301h may be performed before step 301.

301a: The terminal device sends an RRC resume request to the second access network device. The RRC resume request includes the event report. Correspondingly, the second access network device receives the RRC resume request from the terminal device.

301b: The second access network device sends a retrieve UE context request to the first access network device. Correspondingly, the first access network device receives the retrieve UE context request from the second access network device.

The retrieve UE context request is used to request a UE context of the terminal device.

Step 301b is similar to step 201e in the embodiment shown in FIG. 2 above. For details, refer to related descriptions of step 201e in the embodiment shown in FIG. 2 above.

301c: The first access network device determines to retain the UE context.

Step 301c is similar to step 201f in the embodiment shown in FIG. 2 above. For details, refer to related descriptions of step 201f in the embodiment shown in FIG. 2 above.

301d: The first access network device sends the event report to the location management device. Correspondingly, the location management device receives the event report from the first access network device.

301e: The location management device sends a positioning information request message to the first access network device. Correspondingly, the first access network device receives the positioning information request message from the location management device.

Step 301e is similar to step 201a in the embodiment shown in FIG. 2 above. For details, refer to related descriptions of step 201a in the embodiment shown in FIG. 2 above.

301f: The first access network device sends partial UE context transfer to the second access network device. Correspondingly, the second access network device receives the partial UE context transfer from the first access network device.

301g: The second access network device sends a partial UE context transfer acknowledgment to the first access network device. Correspondingly, the first access network device receives the partial UE context transfer acknowledgment from the second access network device.

Step 301f to step 301g are similar to step 201g to step 201h in the embodiment shown in FIG. 2 above. For details, refer to related descriptions of step 201g to step 201h in the embodiment shown in FIG. 2 above.

302: The second access network device sends the RRC release message to the terminal device. The RRC release message includes SRS configuration information and first information. Correspondingly, the first access network device receives the RRC release message from the second access network device.

Step 302 is similar to step 202 in the embodiment shown in FIG. 2 above. For details, refer to related descriptions of step 202 in the embodiment shown in FIG. 2 above.

Optionally, the embodiment shown in FIG. 2 further includes step 302a. Step 302a may be performed after step 302.

302a: The terminal device sends an ACK or an NCAK to the second access network device. Correspondingly, the second access network device receives the ACK or the NACK from the terminal device.

Step 302a is similar to step 202a in the embodiment shown in FIG. 2 above. For details, refer to related descriptions of step 202a in the embodiment shown in FIG. 2 above.

Optionally, the embodiment shown in FIG. 2 further includes step 302b. Step 302b may be performed after step 302.

302b: The terminal device sends a second message to the second access network device. The second message indicates information indicating that the terminal device is successfully configured or fails to be configured with the SRS. Correspondingly, the second access network device receives the second message from the terminal device.

Step 302b is similar to step 202b in the embodiment shown in FIG. 2 above. For details, refer to related descriptions of step 202b in the embodiment shown in FIG. 2 above.

303: The second access network device sends a first message to the first access network device. The first message is used to feed back, to the first access network device, information indicating that the second access network device successfully sends or fails to send the RRC release message to the terminal device. Correspondingly, the first access network device receives the first message from the first access network device.

Step 303 is similar to step 203 in the embodiment shown in FIG. 2 above. For details, refer to related descriptions of step 203 in the embodiment shown in FIG. 2 above.

Optionally, the first access network device may feed back a corresponding message to the location management device based on the first message, so that the location management device determines an SRS configuration status of the terminal device. Optionally, the embodiment shown in FIG. 3 further includes step 304 or step 305. Step 304 or step 305 may be performed after step 303.

304: If the first message is used to feed back, to the first access network device, the information indicating that the second access network device successfully sends the RRC release message to the terminal device, the first access network device sends a positioning information response message to the location management device. Correspondingly, the location management device receives the positioning information response message from the first access network device.

305: If the first message is used to feed back, to the first access network device, the information indicating that the second access network device fails to send the RRC release message to the terminal device, the first access network device sends a positioning information failure message to the location management device. Correspondingly, the location management device receives the positioning information failure message from the first access network device.

Step 304 and step 305 are similar to step 204 and step 205 in the embodiment shown in FIG. 2 above. For details, refer to related descriptions of step 204 and step 205.

For beneficial effect of the embodiment shown in FIG. 3, refer to the foregoing related descriptions.

In this application, the terminal device camps on a cell of the access network device, and the access network device may deliver the SRS configuration information to the terminal device via the RRC release message. The access network device sends the SRS configuration information to the location management device. The access network device may determine whether the terminal device successfully receives the RRC release message. However, the access network device cannot learn whether the terminal device is successfully configured with the SRS. For example, the terminal device cannot send the SRS based on the SRS configuration information, and consequently, the terminal device fails to be configured with the SRS. However, the access network device sends the SRS configuration information to the location management device, and the location management device locates the terminal device based on the SRS configuration information. Consequently, a positioning function cannot be normally performed, and the terminal device cannot be located.

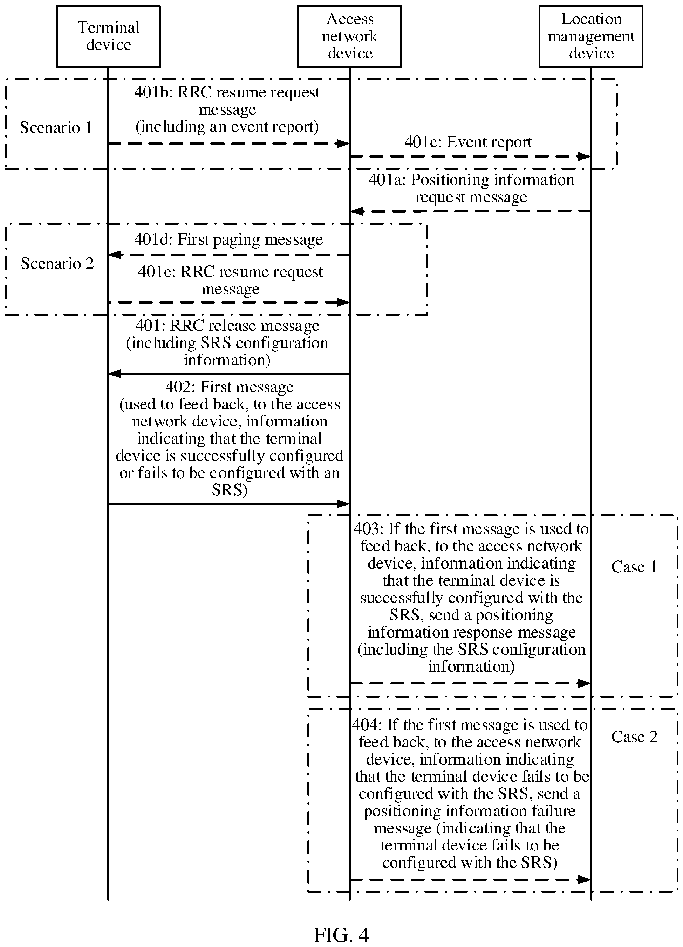

This application provides a corresponding technical solution, to ensure normal implementation of a positioning function and avoid a resource waste. For details, refer to related descriptions of embodiments shown in FIG. 4 below.

FIG. 4 is a diagram of another embodiment of a communication method according to an embodiment of this application. Refer to FIG. 4. The communication method includes the following steps.

401: An access network device sends an RRC release message to a terminal device. Correspondingly, the terminal device receives the RRC release message from the access network device.

The RRC release message includes SRS configuration information of the terminal device. The access network device is a current serving access network device of the terminal device. Alternatively, the access network device is an access network device on which the terminal device camps.

Specifically, the access network device determines the SRS configuration information for the terminal device. Then, the access network device may deliver the SRS configuration information via the RRC release message.

In a possible implementation, the RRC release message is used by the access network device to release the terminal device to be in an RRC inactive state or an RRC idle state. The access network device delivers the SRS configuration information via the RRC release message, so that the terminal device sends an SRS in the RRC inactive state or the RRC idle state, thereby implementing low-power consumption locating of the terminal device.

It should be noted that step 401 is performed in a manner in which the access network device delivers the SRS configuration information via the RRC release message. In actual application, the access network device sends the SRS configuration information to the terminal device via another message. For example, the access network device sends the SRS configuration information to the terminal device via an RRC reconfiguration message.

Optionally, the location management device may request the access network device to locate the terminal device. Optionally, the embodiment shown in FIG. 4 further includes step 401a.

401a: The location management device sends a positioning information request message to the access network device. Correspondingly, the access network device receives the positioning information request message from the location management device.

The positioning information request (positioning information request) message is used to request to configure the SRS for the terminal device.

Optionally, the positioning information request message is carried in a new radio positioning protocol A (new radio positioning protocol A, NRPPa) message. The positioning information request message includes related information of the SRS that the location management device requests to configure for the terminal device.

Specifically, the location management device determines to locate the terminal device, and the location management device may send the positioning information request message to the access network device.

Based on the foregoing step 401a, the following describes two possible scenarios.

The following describes a scenario 1. Optionally, the embodiment shown in FIG. 4 further includes step 401b and step 401c. Step 401b and step 401c may be performed after step 401a.

401b: The terminal device sends an RRC resume request message to the access network device. Correspondingly, the access network device receives the RRC resume request message from the terminal device.

The RRC resume request (RRC resume request) message includes an event report.

401c: The access network device sends the event report to the location management device. Correspondingly, the location management device receives the event report from the access network device.

The following describes a scenario 2. Optionally, the embodiment shown in FIG. 4 further includes step 401d and step 401e. Step 401d and step 401e may be performed after step 401a.

401d: The access network device sends a first paging message to the terminal device. Correspondingly, the terminal device receives the first paging message from the access network device.

The first paging (Paging) message is used by the access network device to page the terminal device.

401e: The terminal device sends an RRC resume request message to the access network device. Correspondingly, the access network device receives the RRC resume request message from the terminal device.

The RRC resume request (RRC resume request) message is used to request to resume an RRC connected state of the terminal device.

It should be noted that the access network device may perform only step 401a; or the access network device performs step 401a to step 401c; or the access network device performs step 401a and step 401d to step 401e. This is not specifically limited in this application.

402: The terminal device sends a first message to the access network device. Correspondingly, the access network device receives the first message from the terminal device.

The first message indicates information indicating that the terminal device is successfully configured or fails to be configured with the SRS. Alternatively, the first message is used to feed back, to the access network device, information indicating that the terminal device is successfully configured or fails to be configured to send the SRS. Alternatively, the first message is used to feed back, to the access network device, information indicating that the terminal device is successfully or fails to be configured. The following uses an example in which the first message indicates information indicating that the terminal device is successfully configured or fails to be configured with the SRS for description.

Specifically, the terminal device receives the RRC release message. The terminal device determines the SRS configuration information via the RRC release message. If the terminal device may send the SRS based on the SRS configuration information, the terminal device may send the first message to the access network device. The first message indicates information indicating that the terminal device is successfully configured with the SRS. If the terminal device cannot send the SRS based on the SRS configuration information, the terminal device may send the first message to the access network device, where the first message indicates information indicating that the terminal device fails to be configured with the SRS.

Optionally, the first message may be an RRC message or a MAC message. For example, the first message is a MAC CE.

For example, the first message is an RRC release complete (RRC release complete) message or an RRC release accept (RRC release accept) message. The RRC release complete message or the RRC release accept message indicates information indicating that the terminal device is successfully configured with the SRS, or notifies information indicating that the terminal device is successfully configured with the SRS.

For example, the first message is an RRC release configuration failure (RRC Release configuration failure) message. The RRC release configuration failure message indicates information indicating that the terminal device fails to be configured with the SRS, or notifies the access network device of information indicating that the terminal device fails to be configured with the SRS

Optionally, the access network device may feed back a corresponding message to the location management device based on the first message, so that the location management device determines an SRS configuration status of the terminal device. Optionally, the embodiment shown in FIG. 4 further includes step 403 or step 404. Step 403 or step 404 may be performed after step 402.

403: If the first message is used to feed back, to the access network device, the information indicating that the terminal device is successfully configured with the SRS, the access network device sends a positioning information response message to the location management device. Correspondingly, the location management device receives the positioning information response message from the access network device.

The positioning information response message includes the SRS configuration information of the terminal device.

Specifically, if the first message indicates that the terminal device is successfully configured with the SRS, the access network device may send the positioning information response message to the location management device. The positioning information response message includes the SRS configuration information of the terminal device. In other words, if the access network device successfully configures the terminal device to send the SRS or the access network device successfully configures the SRS for the terminal device, the access network device sends the positioning information response message to the location management device. Therefore, the location management device locates the terminal device based on the SRS configuration information. For example, the location management device may select at least one access network device, and measure, via the at least one access network device, the SRS sent by the terminal device, to obtain a measurement result. Then, the at least one access network device sends the measurement result to the location management device. The location management device locates the terminal device based on the measurement result.

404: If the first message is used to feed back, to the access network device, the information indicating that the terminal device fails to be configured with the SRS, the access network device sends a positioning information failure message to the location management device. Correspondingly, the location management device receives the positioning information failure message from the access network device.

The positioning information failure message indicates that the terminal device fails to be configured with the SRS. Alternatively, the positioning information failure message indicates that the access network device fails to configure the SRS for the terminal device. Alternatively, the positioning information failure message indicates that the access network device fails to configure the terminal device to send the SRS.

Specifically, if the first message indicates that the terminal device fails to be configured with the SRS, the access network device may send the positioning information failure message to the location management device. The positioning information failure message indicates that the terminal device fails to be configured with the SRS. In other words, the access network device cannot configure the terminal device to send the SRS or the access network device fails to configure the SRS for the terminal device, and the access network device sends the positioning information failure message to the location management device. In this way, the location management device may take corresponding measures. For example, the location management device may select another location method to locate the terminal device. Therefore, this avoids a case in which the location management device cannot learn whether the SRS of the terminal device is successfully configured for the terminal device when the first access network device determines to retain the UE context. This avoids positioning failure when the SRS is not successfully configured for the terminal device. This can further avoid a resource waste caused when the location management device requests the access network device to measure the SRS.

In embodiments of this application, the access network device sends the RRC release message to the terminal device. The RRC release message includes the SRS configuration information of the terminal device. Then, the access network device receives the first message from the terminal device. The first message indicates information indicating that the terminal device is successfully configured or fails to be configured with the SRS. Alternatively, the first message is used to feed back, to the access network device, information indicating that the terminal device is successfully configured or fails to be configured to send the SRS. Alternatively, the first message is used to feed back, to the access network device, information indicating that the terminal device is successfully or fails to be configured. In this way, the access network device may determine, based on the first message, whether to send the SRS configuration information to the location management device. It is ensured that the location management device locates the terminal device after obtaining the SRS configuration information. Therefore, the positioning function is normally performed. This avoids failure of locating the terminal device by the location management device when the SRS configuration information is not successfully configured for the terminal device. This can further avoid a resource waste of the access network device caused when the location management device requests the access network device to measure the SRS.

It may be understood that, technical features with a same name in different embodiments may represent different meanings, and specifically, the technical features should be understood with reference to specific embodiments in which the technical features are located. Certainly, the foregoing method embodiments may be implemented separately, or may be implemented together. For terms and conventional technologies in embodiments, refer to each other. In other words, technical solutions that do not conflict with each other or that do not logically conflict with each other in different embodiments may be combined with each other. This is not specifically limited in this application.

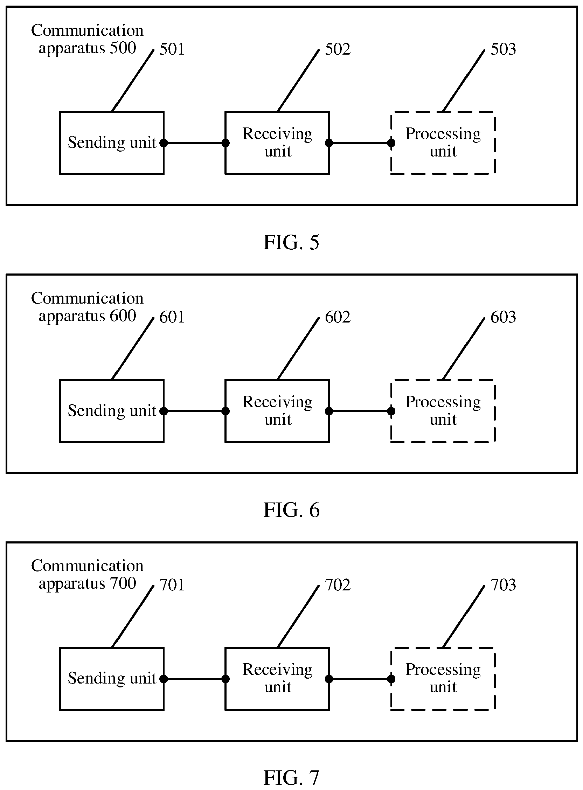

The following describes a communication apparatus provided in this application. FIG. 5 is a diagram of a structure of a communication apparatus 500 according to an embodiment of this application. The communication apparatus 500 includes a sending unit 501 and a receiving unit 502. Optionally, the communication apparatus 500 further includes a processing unit 503.

Optionally, when the communication apparatus 500 includes a first access network device or a chip in the first access network device, the communication apparatus 500 may be configured to perform all or some of the steps performed by the first access network device in embodiments shown in FIG. 2 and FIG. 3. For details, refer to related descriptions in the method embodiments shown in FIG. 2 and FIG. 3.

The sending unit 501 is configured to: send an RRC release message to a terminal device via a second access network device, and send first information to the second access network device, where the first information is used to request the second access network device to feed back, to the communication apparatus 500, information indicating whether the second access network device successfully sends the RRC release message to the terminal device, and the RRC release message includes SRS configuration information of the terminal device.

The receiving unit 502 is configured to receive the first message from the second access network device, where the first message is used to feed back, to the communication apparatus 500, information indicating that the second access network device successfully sends or fails to send the RRC release message to the terminal device.

In a possible implementation, the RRC release message and the first information are carried in a retrieve UE context failure message.

In another possible implementation, the first information includes a first information element of the retrieve UE context failure message, or the first information includes first indication information. The first information element or the first indication information is used to request the second access network device to feed back, to the communication apparatus 500, the information indicating whether the second access network device successfully sends the RRC release message to the terminal device.

In another possible implementation, the first message is a feedback message, an acknowledgment message, or a notification message.

In another possible implementation, if the first message is used to feed back, to the communication apparatus 500, information indicating that the second access network device successfully sends the RRC release message to the terminal device, the sending unit 501 is further configured to:
send a positioning information response message to a location management device, where the positioning information response message includes the SRS configuration information.

In another possible implementation, if the first message is used to feed back, to the communication apparatus 500, information indicating that the second access network device fails to send the RRC release message to the terminal device, the sending unit 501 is further configured to:
send a positioning information failure message to a location management device, where the positioning information failure message indicates that the terminal device fails to be configured with an SRS.

Optionally, when the communication apparatus 500 includes an access network device or a chip in the access network device, the communication apparatus 500 may be configured to perform all or some of the steps performed by the access network device in the embodiment shown in FIG. 4. For details, refer to related descriptions in the method embodiment shown in FIG. 4. The communication apparatus 500 is configured to perform the following solutions.

The sending unit 501 is configured to send an RRC release message to a terminal device, where the RRC release message includes SRS configuration information of the terminal device.

The receiving unit 502 is configured to receive a first message from the terminal device, where the first message is used to feed back, to the communication apparatus 500, information indicating that the terminal device is successfully configured or fails to be configured with an SRS.

In a possible implementation, the first message is an RRC release complete message or an RRC release accept message, and the first message is used to feed back, to the communication apparatus 500, information indicating that the terminal device is successfully configured with the SRS.

In another possible implementation, the first message is an RRC release configuration failure message, and the first message is used to feed back, to the communication apparatus 500, information indicating that the terminal device fails to be configured with the SRS.

In another possible implementation, if the first message is used to feed back, to the communication apparatus 500, the information indicating that the terminal device is successfully configured with the SRS, the sending unit 501 is further configured to:
send a positioning information response message to a location management device, where the positioning information response message includes the SRS configuration information.

In another possible implementation, if the first message is used to feed back, to the communication apparatus 500, the information indicating that the terminal device fails to be configured with the SRS, the sending unit 501 is further configured to:
send a positioning information failure message to the location management device, where the positioning information failure message indicates that the terminal device fails to be configured with the SRS.

The following describes a communication apparatus provided in this application. FIG. 6 is a diagram of a structure of a communication apparatus 600 according to an embodiment of this application. The communication apparatus 600 includes a sending unit 601 and a receiving unit 602. Optionally, the communication apparatus 600 further includes a processing unit 603.

Optionally, when the communication apparatus 600 includes a second access network device or a chip in the second access network device, the communication apparatus 600 may be configured to perform all or some of the steps performed by the second access network device in embodiments shown in FIG. 2 and FIG. 3. For details, refer to related descriptions in the method embodiments shown in FIG. 2 and FIG. 3.

The receiving unit 602 is configured to receive an RRC release message and first information from a first access network device, where the first information is used to request the communication apparatus 600 to feed back, to the first access network device, information indicating whether the communication apparatus 600 successfully sends the RRC release message to a terminal device, and the RRC release message includes SRS configuration information of the terminal device.

The sending unit 601 is configured to: send the RRC release message to the terminal device, send a first message to the first access network device, where the first message is used to feed back, to the first access network device, information indicating that the communication apparatus 600 successfully sends or fails to send the RRC release message to the terminal device.

In a possible implementation, the RRC release message and the first information are carried in a retrieve UE context failure message.

In another possible implementation, the first information includes a first information element of the retrieve UE context failure message, or the first information includes first indication information. The first information element or the first indication information is used to request the communication apparatus 600 to feed back, to the first access network device, the information indicating whether the communication apparatus 600 successfully sends the RRC release message to the terminal device.

In another possible implementation, the first message is a feedback message, an acknowledgment message, or a notification message.

In another possible implementation, the receiving unit 602 is further configured to:
receive a second message from the terminal device, where the second message is used to feed back, to the communication apparatus 600, information indicating that the terminal device is successfully configured or fails to be configured with an SRS.

In another possible implementation, the second message is an RRC release complete message or an RRC release accept message, and the second message is used to feed back, to the communication apparatus 600, information indicating that the terminal device is successfully configured with the SRS.

In another possible implementation, the second message is an RRC release configuration failure message, and the second message is used to feed back, to the communication apparatus 600, information indicating that the terminal device fails to be configured with the SRS.

The following describes a communication apparatus provided in this application. FIG. 7 is a diagram of a structure of a communication apparatus 700 according to an embodiment of this application. The communication apparatus 700 includes a sending unit 701 and a receiving unit 702. Optionally, the communication apparatus 700 further includes a processing unit 703.

Optionally, when the communication apparatus 700 includes a terminal device or a chip in the terminal device, the communication apparatus 700 may be configured to perform all or some of the steps performed by the terminal device in embodiments shown in FIG. 2 and FIG. 3. For details, refer to related descriptions in the method embodiments shown in FIG. 2 and FIG. 3.

The receiving unit 702 is configured to receive an RRC release message from a second access network device, where the RRC release message includes SRS configuration information of a communication apparatus 700.

The sending unit 701 is configured to send a second message to the second access network device, where the second message is used to feed back, to the second access network device, information indicating that the communication apparatus 700 is successfully configured or fails to be configured with an SRS.

In a possible implementation, the second message is an RRC release complete message or an RRC release accept message, and the second message is used to feed back, to the second access network device, information indicating that the communication apparatus 700 is successfully configured with the SRS.

In another possible implementation, the second message is an RRC release configuration failure message, and the second message is used to feed back, to the second access network device, information indicating that the communication apparatus 700 fails to be configured with the SRS.

Optionally, when the communication apparatus 700 includes a terminal device or a chip in the terminal device, the communication apparatus 700 may be configured to perform all or some of the steps performed by the terminal device in the embodiment shown in FIG. 4. For details, refer to related descriptions in the method embodiment shown in FIG. 4.

The receiving unit 702 is configured to receive an RRC release message from an access network device, where the RRC release message includes SRS configuration information of a communication apparatus 700.

The sending unit 701 is configured to send a first message to the access network device, where the first message is used to feed back, to the access network device, information indicating that the communication apparatus 700 is successfully configured or fails to be configured with an SRS.

In a possible implementation, the first message is an RRC release complete message or an RRC release accept message, and the first message is used to feed back, to the access network device, information indicating that the communication apparatus 700 is successfully configured with the SRS.

In another possible implementation, the first message is an RRC release configuration failure message, and the first message is used to feed back, to the access network device, information indicating that the communication apparatus 700 fails to be configured with the SRS.

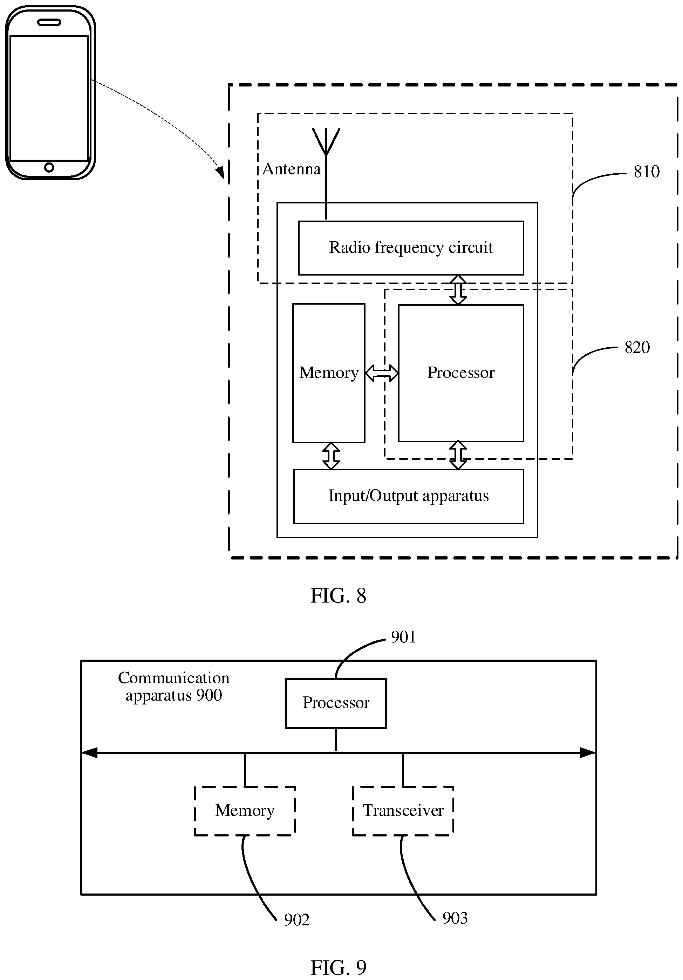

The following shows a diagram of a possible structure of a terminal device with reference to FIG. 8.

FIG. 8 is a simplified diagram of a structure of a terminal device. For ease of understanding and figure illustration, an example in which the terminal device is a mobile phone is used in FIG. 8. As shown in FIG. 8, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data. The radio frequency circuit is mainly configured to: perform conversion between a baseband signal and a radio frequency signal, and process the radio frequency signal.

The antenna is mainly configured to receive and send a radio frequency signal in a form of an electromagnetic wave. The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device, and the processor that has a processing function may be considered as a processing unit of the terminal device. As shown in FIG. 8, the terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement the receiving function in the transceiver unit 810 may be considered as a receiving unit, and a component configured to implement the sending function in the transceiver unit 810 may be considered as a sending unit. That is, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmitter circuit, or the like.

It should be understood that, the transceiver unit 810 is configured to perform a sending operation and a receiving operation on the terminal device side in the foregoing method embodiments, and the processing unit 820 is configured to perform an operation on the terminal device in the foregoing method embodiments other than the receiving and sending operations.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip. In the foregoing method embodiments, the sending operation corresponds to an output of the input/output circuit, and the receiving operation corresponds to an input of the input/output circuit.

This application further provides a communication apparatus. FIG. 9 is another diagram of a structure of a communication apparatus 900 according to an embodiment of this application.

The communication apparatus 900 includes a processor 901. Optionally, the communication apparatus 900 further includes a memory 902 and a transceiver 903.

The processor 901, the memory 902, and the transceiver 903 are separately connected through a bus, and the memory stores computer instructions.

When the communication apparatus 900 includes a first access network device or a chip in the first access network device, the communication apparatus 900 may be configured to perform the steps performed by the first access network device in embodiments shown in FIG. 2 and FIG. 3. For details, refer to related descriptions in the method embodiments.

When the communication apparatus 900 includes an access network device or a chip in the access network device, the communication apparatus 900 may be configured to perform the steps performed by the access network device in the embodiment shown in FIG. 4. For details, refer to related descriptions in the method embodiment.

The sending unit 501 and the receiving unit 502 shown in FIG. 5 above may be specifically the transceiver 903. Therefore, specific implementation of the transceiver 903 is not described again. The processing unit 503 shown in FIG. 5 above may be specifically the processor 901. Therefore, specific implementation of the processor 901 is not described again.

When the communication apparatus 900 includes a second access network device or a chip in the second access network device, the communication apparatus 900 may be configured to perform the steps performed by the second access network device in embodiments shown in FIG. 2 and FIG. 3. For details, refer to related descriptions in the method embodiments.

The sending unit 601 and the receiving unit 602 shown in FIG. 6 above may be specifically the transceiver 903. Therefore, specific implementation of the transceiver 903 is not described again. The processing unit 603 shown in FIG. 6 above may be specifically the processor 901. Therefore, specific implementation of the processor 901 is not described again.

When the communication apparatus 900 includes a terminal device or a chip in the terminal device, the communication apparatus 900 may be configured to perform the steps performed by the terminal device in embodiments shown in FIG. 2 to FIG. 4. For details, refer to related descriptions in the method embodiments.

The sending unit 701 and the receiving unit 702 shown in FIG. 7 above may be specifically the transceiver 903. Therefore, specific implementation of the transceiver 903 is not described again. The processing unit 703 shown in FIG. 7 above may be specifically the processor 901. Therefore, specific implementation of the processor 901 is not described again.

An embodiment of this application further provides a communication system. The communication system includes a first access network device and a second access network device. Optionally, the communication system further includes a terminal device.

The first access network device is configured to perform all or some of the steps performed by the first access network device in embodiments shown in FIG. 2 and FIG. 3. The second access network device is configured to perform all or some of the steps performed by the second access network device in embodiments shown in FIG. 2 and FIG. 3. The terminal device is configured to perform all or some of the steps performed by the terminal device in embodiments shown in FIG. 2 and FIG. 3.

An embodiment of this application further provides a communication system. The communication system includes an access network device and a terminal device. The access network device is configured to perform all or some of the steps performed by the access network device in the embodiment shown in FIG. 4. The terminal device is configured to perform all or some of the steps performed by the terminal device in the embodiment shown in FIG. 4.

An embodiment of this application further provides a computer program product including computer instructions. When the computer program product runs on a computer, the computer is enabled to perform the communication method in embodiments shown in FIG. 2 to FIG. 4.

An embodiment of this application further provides a computer-readable storage medium, including computer instructions. When the computer instructions are run on a computer, the computer is enabled to perform the communication method in embodiments shown in FIG. 2 to FIG. 4.

An embodiment of this application further provides a chip apparatus, including a processor, configured to invoke a computer program or computer instructions stored in a memory, so that the processor performs the communication method in embodiments shown in FIG. 2 to FIG. 4.

Optionally, the processor is coupled to the memory through an interface.

Optionally, the chip apparatus further includes the memory, and the memory stores the computer program or computer instructions.

The processor mentioned in any of the foregoing may be a general central processing unit, a microprocessor, an application-specific integrated circuit (application-specific integrated circuit, ASIC), or one or more of integrated circuits configured to control program execution of the communication method in embodiments shown in FIG. 2 and FIG. 4. The memory mentioned anywhere above may be a read-only memory (read-only memory, ROM), another type of static storage device that can store static information and instructions, a random access memory (random access memory, RAM), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method comprises:
sending, by a first access network device, a radio resource control RRC release message to a terminal device via a second access network device, and sending first information to the second access network device, wherein the first information is used to request the second access network device to feed back, to the first access network device, information indicating whether the second access network device successfully sends the RRC release message to the terminal device, and the RRC release message comprises sounding reference signal SRS configuration information of the terminal device; and
receiving, by the first access network device, a first message from the second access network device, wherein the first message is used to feed back, to the first access network device, information indicating that the second access network device successfully sends or fails to send the RRC release message to the terminal device.

2. The method according to claim 1, wherein the RRC release message and the first information are carried in a retrieve context failure message.

3. The method according to claim 2, wherein the first information comprises a first information element of the retrieve context failure message, or the first information comprises first indication information; and
the first information element or the first indication information is used to request the second access network device to feed back, to the first access network device, the information indicating whether the second access network device successfully sends the RRC release message to the terminal device.

4. The method according to any one of claims 1 to 3, wherein the first message is a feedback message, an acknowledgment message, or a notification message.

5. The method according to any one of claims 1 to 4, wherein if the first message is used to feed back, to the first access network device, information indicating that the second access network device successfully sends the RRC release message to the terminal device, the method further comprises:
sending, by the first access network device, a positioning information response message to a location management device, wherein the positioning information response message comprises the SRS configuration information.

6. The method according to any one of claims 1 to 4, wherein if the first message is used to feed back, to the first access network device, information indicating that the second access network device fails to send the RRC release message to the terminal device, the method further comprises:
sending, by the first access network device, a positioning information failure message to a location management device, wherein the positioning information failure message indicates that the terminal device fails to be configured to send an SRS.

7. A communication method, wherein the method comprises:
receiving, by a second access network device, a radio resource control RRC release message and first information from a first access network device, wherein the first information is used to request the second access network device to feed back, to the first access network device, information indicating whether the second access network device successfully sends the RRC release message to a terminal device, and the RRC release message comprises sounding reference signal SRS configuration information of the terminal device;
sending, by the second access network device, the RRC release message to the terminal device; and
sending, by the second access network device, a first message to the first access network device, wherein the first message is used to feed back, to the first access network device, information indicating that the second access network device successfully sends or fails to send the RRC release message to the terminal device.

8. The method according to claim 7, wherein the RRC release message and the first information are carried in a retrieve context failure message.

9. The method according to claim 8, wherein the first information comprises a first information element of the retrieve context failure message, or the first information comprises first indication information; and
the first information element or the first indication information is used to request the second access network device to feed back, to the first access network device, the information indicating whether the second access network device successfully sends the RRC release message to the terminal device.

10. The method according to any one of claims 7 to 9, wherein the first message is a feedback message, an acknowledgment message, or a notification message.

11. The method according to any one of claims 7 to 10, wherein the method further comprises:
receiving, by the second access network device, a second message from the terminal device, wherein the second message is used to feed back, to the second access network device, information indicating that the terminal device is successfully configured or fails to be configured with an SRS.

12. The method according to claim 11, wherein the second message is an RRC release complete message or an RRC release accept message, and the second message is used to feed back, to the second access network device, information indicating that the terminal device is successfully configured with the SRS.

13. The method according to claim 11, wherein the second message is an RRC release configuration failure message, and the second message is used to feed back, to the second access network device, information indicating that the terminal device fails to be configured with the SRS.

14. A communication method, wherein the method comprises:
receiving, by a terminal device, a radio resource control RRC release message from a second access network device, wherein the RRC release message comprises sounding reference signal SRS configuration information of the terminal device; and
sending, by the terminal device, a second message to the second access network device, wherein the second message is used to feed back, to the second access network device, information indicating that the terminal device is successfully configured or fails to be configured with an SRS.

15. The method according to claim 14, wherein the second message is an RRC release complete message or an RRC release accept message, and the second message is used to feed back, to the second access network device, information indicating that the terminal device is successfully configured with the SRS.

16. The method according to claim 14, wherein the second message is an RRC release configuration failure message, and the second message is used to feed back, to the second access network device, information indicating that the terminal device fails to be configured with the SRS.

17. A communication apparatus, wherein the communication apparatus comprises a sending unit and a receiving unit; and
the sending unit is configured to perform the sending operation according to any one of claims 1 to 6, and the receiving unit is configured to perform the receiving operation according to any one of claims 1 to 6; or
the sending unit is configured to perform the sending operation according to any one of claims 7 to 13, and the receiving unit is configured to perform the receiving operation according to any one of claims 7 to 13; or
the sending unit is configured to perform the sending operation according to any one of claims 14 to 16, and the receiving unit is configured to perform the receiving operation according to any one of claims 14 to 16.

18. A communication apparatus, wherein the communication apparatus comprises a processor; and
the processor is configured to execute a computer program or computer instructions in a memory, to perform the method according to any one of claims 1 to 6, or perform the method according to any one of claims 7 to 13, or perform the method according to any one of claims 14 to 16.

19. The communication apparatus according to claim 18, wherein the communication apparatus further comprises the memory.

20. A computer-readable storage medium, wherein the computer-readable storage medium stores a computer program, and when the computer program is executed by a communication apparatus, the communication apparatus is enabled to perform the method according to any one of claims 1 to 6, or the communication apparatus is enabled to perform the method according to any one of claims 7 to 13, or the communication apparatus is enabled to perform the method according to any one of claims 14 to 16.
